# EUROPEAN PATENT APPLICATION

(11) **EP 2 421 104 A1**
(43) Date of publication of application: **22.02.2012**
(21) Application number: 10173024.0
(22) Date of filing: 17.08.2010
(51) Int. Cl.: H02B 1/30

(54) **Cable feedthrough**

(71) Applicant: Tyco Electronics Raychem BVBA, 3010 Kessel-Lo (BE)
(72) Inventor: Claessens, Bart Mattie, 3500, Hasselt (BE); Alaerts, Roger, 3200, Aarschot (BE)
(74) Representative: Beck, Josef

(57) **Abstract**

An apparatus for feeding through at least one filament comprises a body and at least one finger arranged in a clearance of the body. The finger has a side face adverse to a side face of the body. The side face of the finger and the side face of the body define between them a slot for receiving the filament. A foam strip is attached on at least one of the side faces defining the slot. The finger can be separated from the body.

## Description

The invention relates to an apparatus for feeding through at least one filament according to claim 1.

For many applications it is necessary to feed filaments through a wall of a box or a casing. The filaments may for example be optical fibers or electric cables. The document EP 0 531 172 B1 describes a possible feedthrough. Similar arrangements are also known for fixating filaments inside a casing. Such arrangements are described in the documents US 2008/0042536 A1 and EP 0 368 442 A2.

It is an object of the present invention to provide an improved apparatus for feeding through at least one filament. This objective is achieved by an apparatus according to claim 1. Preferred embodiments are disclosed in the dependent claims.

According to the invention, an apparatus for feeding through at least one filament comprises a body and at least one finger arranged in a clearance of the body. The finger has a side face adverse to a side face of the body. The side face of the finger and the side face of the body define between them a slot for receiving the filament. A foam strip is attached on at least one of the side faces defining the slot. Furthermore, the finger can be separated from the body. Advantageously, this apparatus allows for feeding through a large number of filaments. Another advantage is that the apparatus may provide a sealing level of IP54 or higher. A further advantage is that the detachable finger allows for a simple replacement of the foam strip.

Preferably, the apparatus comprises a plurality of coplanar fingers. Opposed side faces of two adjacent fingers define between them an additional slot. A foam strip is attached on at least one of the side faces defining the additional slot. Advantageously, the apparatus then provides space for feeding through an even higher number of filaments.

It is advisable that two side faces defining one slot both comprise foam strips and that these foam strips on opposed side faces of one slot are in contact with one another. The foam strips will then hold the filaments firmly and prevent dust and humidity from passing through the slot.

Preferably, the foam strips provide a sealing of the slot. A sealing level of IP54 or higher may be provided. This can conveniently be achieved by designing the foam strips to be resiliently compressible. This furthermore allows for an easy placement of the filaments.

In one embodiment of the invention, the at least one foam strip is glued on a side face. This allows for easy manufacture of the apparatus.

Preferentially, the slots are designed for receiving an intermediate portion of the filament, the filament extending normal to the plane of the fingers.

According to a further development, foam strips on opposed side faces of one finger are connected on an upper face of the finger. This simplifies manufacture of the apparatus and also simplifies introducing the filament in the slot.

In a further improved embodiment of the apparatus, at least one finger can be connected to the body by means of a snap-on connection. This allows for an easy mounting and demounting of the finger.

It is convenient that a foot section of at least one finger comprises a bore and the body comprises a corresponding tap hole. Advantageously this allows for fixating the finger on the body.

In one embodiment of the apparatus, the foot section of at least one finger comprises a groove and the body comprises a bulge designed for mating with the groove. Advantageously, this simplifies aligning the finger on the body.

In one embodiment of the apparatus, the foot section of at least one finger comprises a cut-out and the body comprises a block designed for mating with the cut-out. This also helps with aligning the finger on the body and with fixating the finger on the body.

In one embodiment, the foot section of at least one finger comprises a first pin and the body comprises an opening for receiving the first pin. Also this arrangement simplifies alignment of the finger on the body and fixates the finger on the body.

In a preferred embodiment, the first pin comprises a first barb for latching in the opening. This allows for a stronger fixation of the finger on the body.

In one embodiment of the apparatus, at least one finger comprises a notch and the body comprises a second pin with a second barb for mating with the notch. This also helps fixating the finger on the body.

In a further improved embodiment, the fingers are at least partially hollow. This simplifies molding the fingers, reduces the weight of the fingers and reduces the amount of material necessary for producing the fingers.

The invention will now be explained in greater detail with reference to the Figures in which
Fig. 1 shows a perspective view of an apparatus according to a first embodiment;
Fig. 2 shows a rear view of the apparatus;
Fig. 3 shows a finger according to the first embodiment;
Fig. 4 shows the finger with a foam strip attached;
Fig. 5 shows a detail of the finger;
Fig. 6 shows a body of the apparatus according to the first embodiment;
Fig. 7 shows a finger of an apparatus according to a second embodiment;
Fig. 8 shows a body of the apparatus according to the second embodiment;
Fig. 9 shows a detail of a finger according to a third embodiment;
Fig. 10 shows a body of the apparatus according to the third embodiment;
Fig. 11 shows a cross section of the apparatus according to the third embodiment;
Fig. 12 shows a finger of an apparatus according to a fourth embodiment;
Fig. 13 shows another view of the finger; and
Fig. 14 shows a perspective view of the apparatus according to the fourth embodiment.

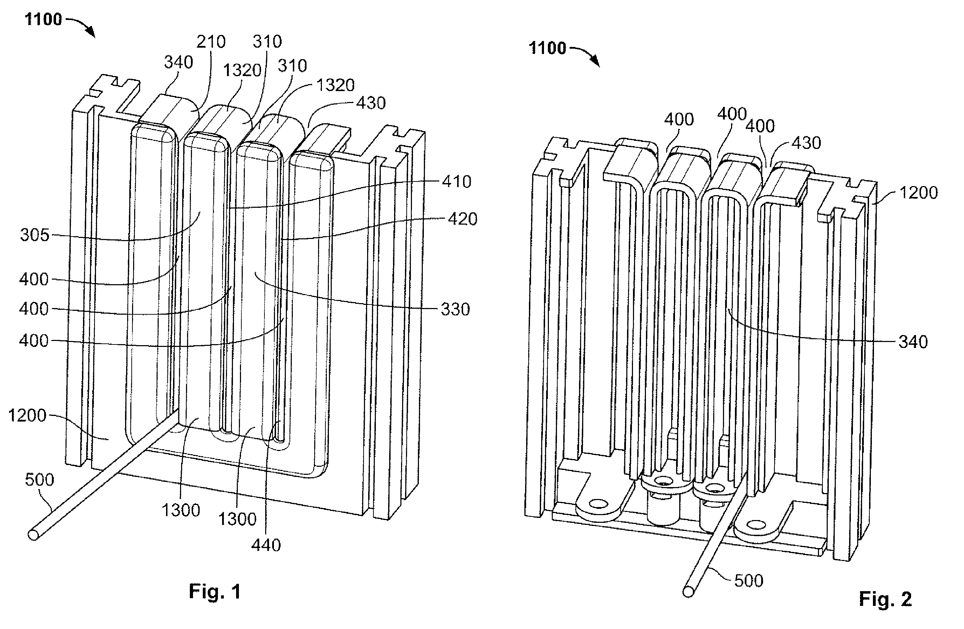

Fig. 1 shows a perspective view of a first sealblock 1100 according to a first embodiment. The first sealblock 1100 may be part of a larger housing or case. The first sealblock 1100 may for example be a part of a building distributor box. The first sealblock 1100 may then serve for feeding through one or more filaments through a wall of the box. The filaments may for example be optical fibers or electric cables. The filaments may also be referred to as pigtails. The first sealblock 1100 may provide sealing against dust, dirt and humidity. The first sealblock 1100 may for example provide a sealing level of IP54 or higher. The first sealblock 1100 may allow to feed through 25 or more filaments.

The first sealblock 1100 comprises a first body 1200 and two first fingers 1300. There may also be fewer or more than two first fingers 1300. The first fingers 1300 are arranged in a coplanar manner similar to the teeth of a comb. Since in the embodiment shown in Fig. 1 only two first fingers 1300 are provided, each first finger 1300 is also a marginal finger 305. If the first sealblock 1100 comprises three or more first fingers 1300, the two outermost first fingers 1300 are referred to as marginal fingers 305.

Each first finger 1300 comprises an outer face 330 and an inner face 340. Only the outer face 330 is visible in Fig. 1. The surface of the first sealblock 1100 that comprises the outer faces 330 of the first fingers 1300 may form an outer surface of a housing or case that comprises the first sealblock 1100.

The first sealblock 1100 furthermore comprises three vertical slots 400 that are arranged vertically and in parallel to each other. A central slot 410 is arranged between two opposed side faces 310 of the two first fingers 1300. Two marginal slots 420 are arranged between a side face 310 of one first finger 1300 and a body side face 210 of the first body 1200, respectively. The body side faces 210 and the side faces 310 of the first fingers 1300 are all arranged in parallel with each other. Each slot 400 comprises an open upper end 430 and a closed lower end 440.

Two first foam strips 1320 are arranged in each of the slots 400, respectively. In the marginal slots 420, one first foam strip 1320 is attached to the body side face 210, the other first foam strip 1320 is attached to the opposing side face 310 of one first finger 1300. In the central slot 410, one first foam strip 1320 is arranged on one side face 310 of one first finger 1300, while the second first foam strip 1320 is arranged on the opposing side face 310 of the adjacent first finger 1300. The first foam strips 1320 may preferentially be glued on the side faces 210, 310. The first foam strips 1320 may for example be glued on the side faces 210, 310 with an adhesive tape. Preferentially, the first foam strips 1320 can be replaced in case they have grown old. Preferentially, the two opposing first foam strips 1320 in one slot 400 are in contact with one another.

Fig. 1 further shows a filament 500 that is arranged near the lower end 440 of one of the slots 400. The filament 500 may be a pigtail, for example an optical fiber or an electric cable. The filament 500 has been introduced to the slot 400 from the upper end 430 of the slot 400. The first foam strips 1320 arranged in that slot 400 are therefore resiliently compressible. The first foam strips 1320 in the slot 400 enclose the filament 500 tightly, thereby providing sealing. Further filaments 500 may be introduced to the same slot 400 such that the individual filaments 500 are stacked on top of each other. Each of the filaments 500 then extends approximately perpendicular to the plane of the first fingers 1300. Further filaments 500 may be introduced to the other slots 400 of the first sealblock 1000. The first sealblock 1000 may comprise space for 25 or more filaments 500 in each of the slots 400. Advantageously, adding the filaments 500 to the slots 400 is very easy and requires no additional tools. Furthermore, no additional foam is needed on the filaments 500 for sealing the first sealblock 1000.

Fig. 2 shows a rear view of the first sealblock 1000 of Fig. 1. Fig. 2 shows that the two first fingers 1300 are partially hollow with an open inner face 340. Fig. 2 furthermore shows that also the first body 1200 is partially hollow. In the hollow space of each first finger 1300 a plurality of fins may arranged to improve stability of the first fingers 1300. The fins may be arranged perpendicular to the plane of the first fingers 1300 and the slots 400. The hollow body 1200 may also comprise fins for stabilization. Fins may however be omitted and are not shown in Fig. 2. The first fingers 1300 and the first body 1200 may also be designed to be massive.

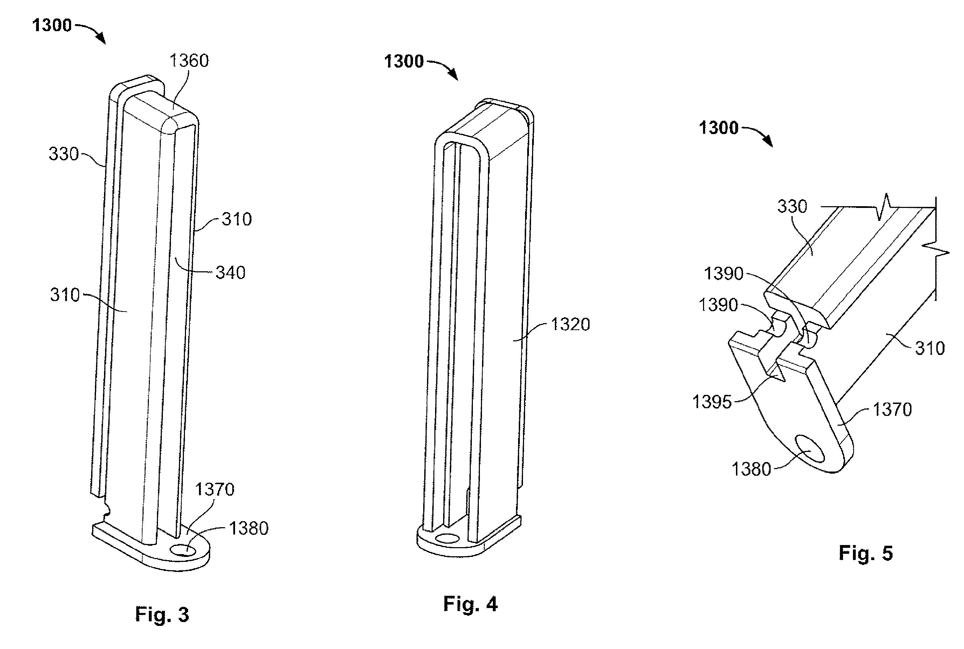

The first fingers 1300 of the first sealblock 1100 are removable from the first body 1200. Figs. 3 and 4 depict one of the first fingers 1300 separately, without (Fig. 3) and with (Fig. 4) the first foam strip 1320 attached. The first foam strips 1320 arranged on the two side faces 310 of the first finger 1300 are connected on an upper face 1360 of the first finger 1300. The first foam strip 1320 therefore comprises a U-shaped cross section. Figs. 1 and 2 show that the first foam strips 1320 arranged on the two body side faces 210 of the first body 1200 also extend slightly onto an upper surface of the first body 1200. An advantage of these arrangements of the first foam strips 1320 is that the upper ends 430 of the slots 400 of the first sealblock 1100 are slightly widened compared to the rest of the slots 400. This simplifies introducing filaments 500 into the slots 400.

Fig. 5 depicts a first foot section 1370 at a lower end of one first finger 1300. The first foot section 1370 serves to connect the first finger 1300 to the first body 1200. The first foot section 1370 therefore comprises a bore 1380 that runs parallel to the longitudinal direction of the first finger 1300. The first foot section 1370 furthermore comprises a cut-out 1395 arranged on the lower end of the outer face 330 of the first finger 1300. The first finger 1300 furthermore comprises a first groove 1390 on the outer face 330 that runs normal to the longitudinal direction of the first finger 1300.

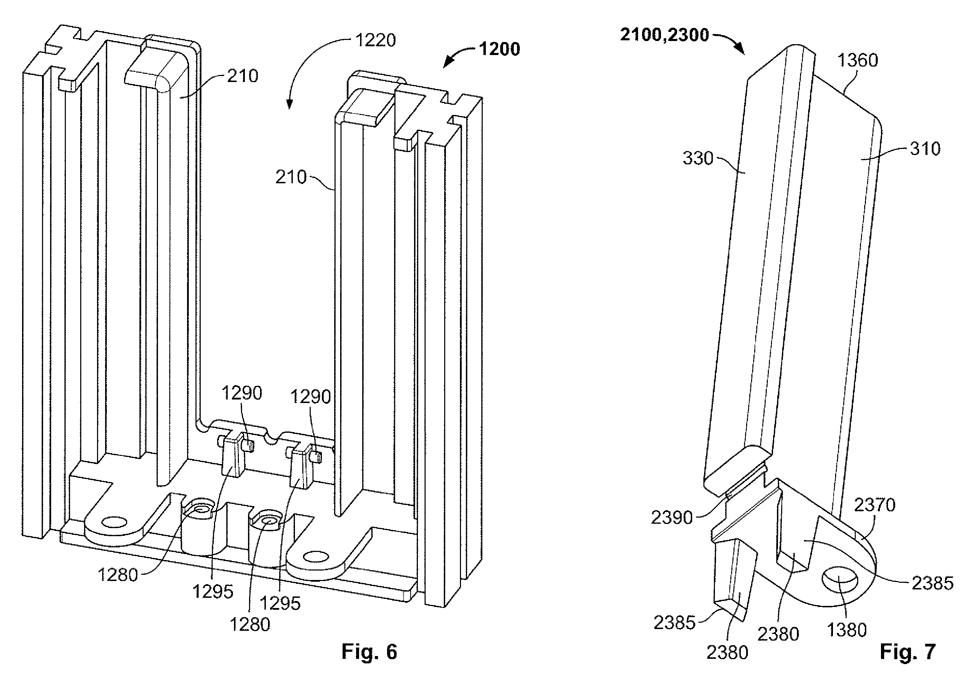

Fig. 6 shows a rear view of the first body 1200 of the first sealblock 1100 with the first fingers 1300 removed. The first body 1200 comprises a clearance 1220 where the first fingers 1300 may be arranged. On a base section of the first body 1200 two tap holes 1280 are arranged. When the first fingers 1300 are arranged on the first body 1200, the bore 1380 of each first finger 1300 is aligned vertically above one tap hole 1280 of the first body 1200, such that the respective first finger 1300 can be fixated on the first body 1200 by means of a screw that runs through the bore 1380 into the tap hole 1280.

The first body 1200 furthermore comprises two blocks 1295 and two first bulges 1290. The blocks 1295 are designed for mating with the cut-outs 1395 of the first fingers 1300. The first bulges 1290 are designed for mating with the first grooves 1390 of the first fingers 1300. Together these mechanisms and fixtures support placing and fixating the first fingers 1300 on the first body 1200 of the first sealblock 1100. It is possible to omit one or more elements of tap hole 1280, first bulge 1290, block 1295 and bore 1380, first groove 1390 and cut-out 1395, respectively.

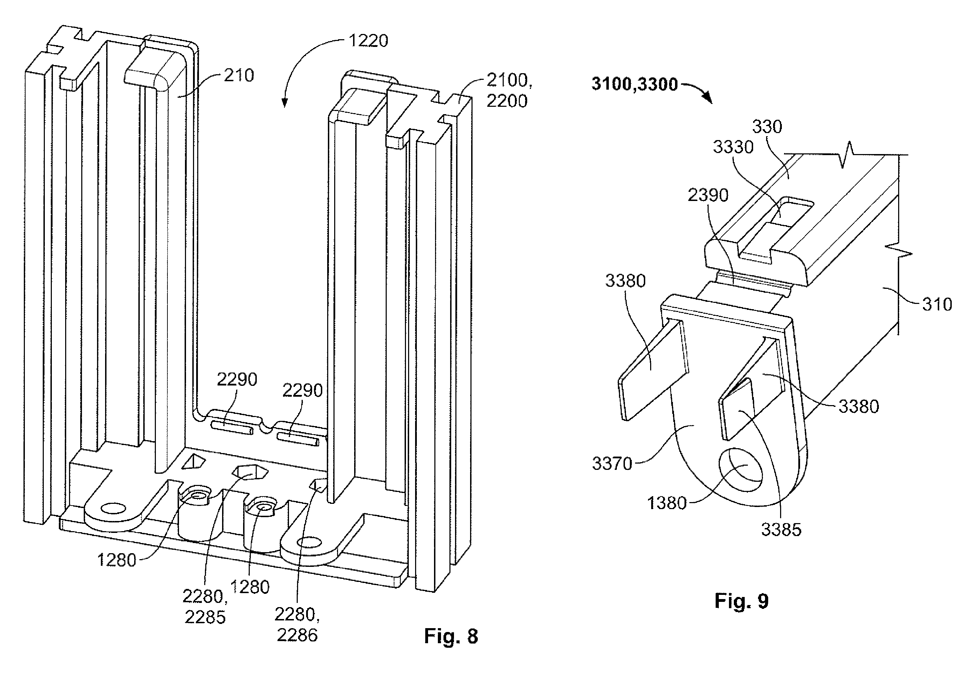

Fig. 7 shows a second finger 2300 of a second sealblock 2100 according to a second embodiment. Fig. 8 shows a second body 2200 of the second sealblock 2100.

In contrast to the first fingers 1300 the second finger 2300 comprises a second foot section 2370 that comprises a second groove 2390 but no cut-out 1395. Accordingly, the second body 2200 comprises two second bulges 2290 for mating with the second grooves 2390 of the second fingers 2300, but no blocks 1295.

Just like the first finger 1300, the second foot section 2370 of the second finger 2300 furthermore comprises a bore 1380 that corresponds with a tap hole 1280 of the second body 2200.

The second foot section 2370 of the second finger 2300 furthermore comprises two first pins 2380 that extend in the longitudinal direction of the second finger 2300. Each first pin 2380 approximately comprises a trapezoid cross section with a base face 2385 pointing outwards in the direction of the side faces 310 of the second finger 2300.

The second body 2200 comprises a number of first openings 2280 for receiving the first pins 2380. Two marginal first openings 2286 are designed for receiving one first pin 2380 of one second finger 2300 respectively and therefore comprise an approximately trapezoid cross section. A central first opening 2285 is designed for receiving one first pin 2380 of one second finger 2300 and one first pin 2380 of an adjacent second finger 2300 and therefore comprises a hexagonal cross section.

The first pins 2380 and the first opening 2280 may also be designed differently. For example, the first pins 2380 might comprise semi-circular cross sections. The marginal first openings 2286 would then also comprise semi-circular cross sections. The central first opening 2285 would comprise a circular cross section.

The side faces 310 of the second fingers 2300 and the body side faces 210 of the second body 2200 will again be provided with first foam strips 1320 or first foam strips 1320 before mounting the second fingers 2300 on the second body 2200. The foam strips arranged on the two side faces 310 of one second finger 2300 may be connected on an upper face 1360 of the second finger 2300 as in the first sealblock 1100. Alternatively, the two side faces 310 of one second finger 2300 may be equipped with separate foam strips.

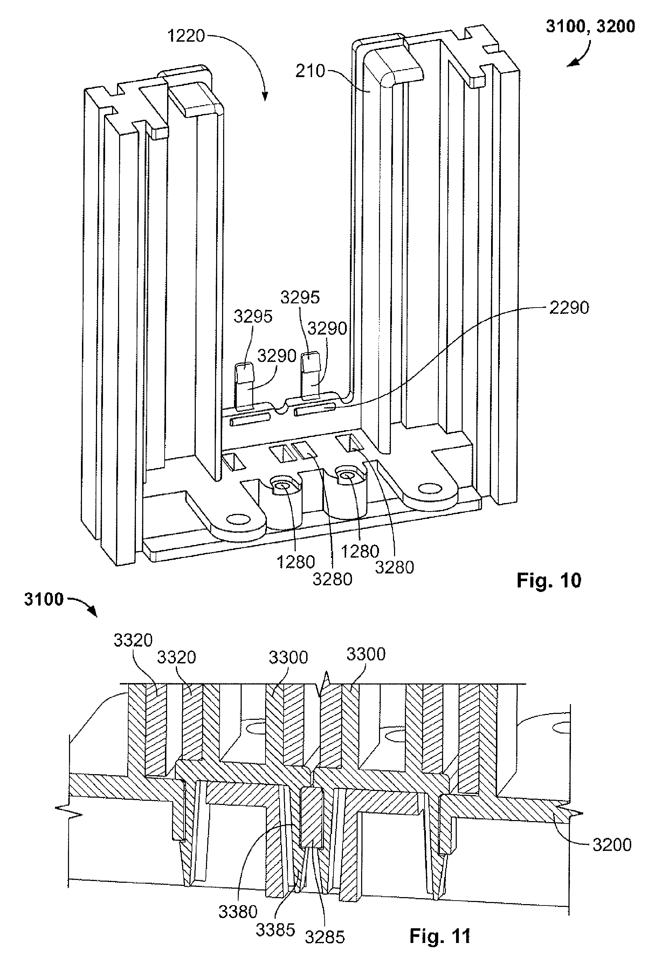

Fig. 9 shows a third foot section 3370 of a third finger 3300 of a third sealblock 3100 according to a third embodiment. Fig. 10 shows a corresponding third body 3200 of the third sealblock 3100. Fig. 11 shows a cross section through the third sealblock 3100 with the third body 3200 mated with two third fingers 3300.

The third foot section 3370 of the third finger 3300 comprises a second groove 2390 like the second finger 2300. The third body 3200 accordingly comprises two second bulges 2290 for mating with the second grooves 2390 of two third fingers 3300.

The third foot section 3370 of the third finger 3300 furthermore comprises two second pins 3380 that extend in the longitudinal direction of the third finger 3300. Each of the second pins 3380 comprises an approximately flat cuboid shape with a first barb 3385 arranged on the free end of each second pin 3380.

Accordingly, the third body 3200 comprises four second openings 3280 for receiving the four second pins 3380 of two third fingers 3300. The cross section of Fig. 11 shows that the first barb 3385 of each second pin 3380 latches below an anchor 3285 in each of the second openings 3280. The second pins 3380 and the second openings 3280 therefore provide a snap-fit connection between the third fingers 3300 and the third body 3200.

In addition, the third fingers 3300 again provide bores 1380 that correspond with tap holes 1280 of the third body 3200 for screwing the third fingers 3300 and the third body 3200 together. Either the bores 1380 and tap holes 1280 or the second pins 3380 and second openings 3280 may be omitted.

The third finger 3300 furthermore comprises a notch 3330 arranged on a lower end of the outer face 330. The third body 3200 accordingly comprises two third pins 3290 that extend parallel to the plane of the third fingers 3300 into the second opening 3280. Each third pin 3290 comprises a second barb 3295 arranged on a free upper end of the third pin 3290. When a third finger 3300 is arranged on the third body 3200, the third pins 3290 and the notch 3330 together provide a snap-fit connection that fixates the third finger 3300 on the third body 3200. The third pins 3290 and the notches 3330 may also be omitted, however.

Again, second foam strips 3320 will be arranged on each side face 310 of each third finger 3300 and on the two body side faces 210 of the third body 3200. Fig. 11 schematically shows that the second foam strips 3320 arranged on two opposing side faces 310 of two adjacent third fingers 3300, as well as two second foam strips 3320 arranged on a side face 310 of a third finger 3300 and an opposing body side face 210 of the third body 3200, do not necessarily need to be in contact with each other. It is, however, preferred that the two second foam strips 3320 in each slot 400 are in contact with one another to provide sealing.

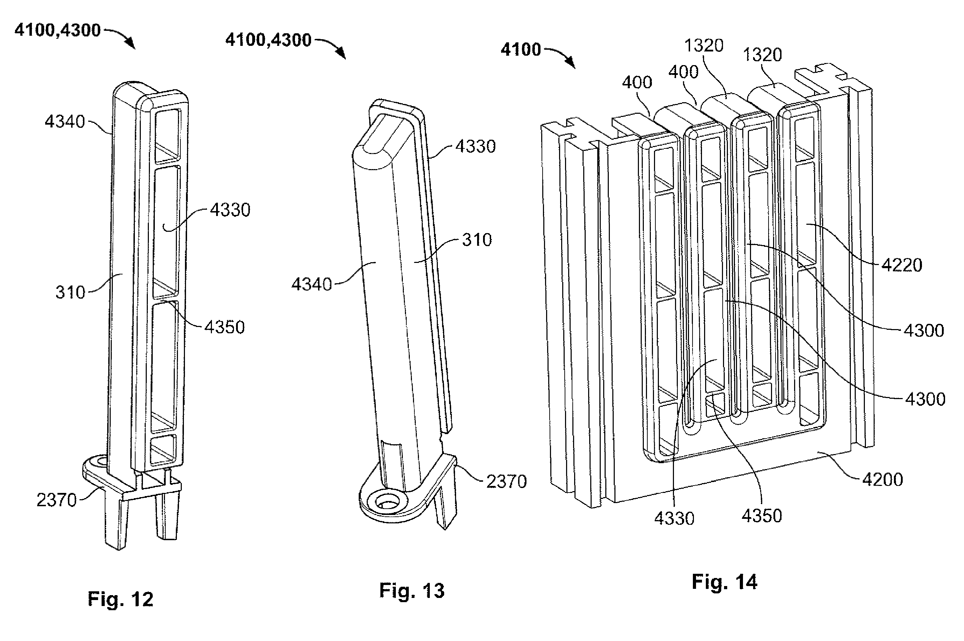

Figs. 12 and 13 show a fourth finger 4300 of a fourth sealblock 4100 according to a fourth embodiment. Fig. 14 shows a perspective view of the fourth sealblock 4100 with a fourth body 4200 and two fourth fingers 4300.

Each fourth finger 4300 comprises a second foot section 2370 like the second finger 2300.

In contrast to the fingers 1300, 2300, 3300 of the previous embodiments, the fourth finger 4300 comprises an open outer face 4330 and a closed inner face 4340. The open outer face 4330 is open towards a hollow interior of the fourth finger 4300. In the hollow space of the fourth finger 4300 a plurality of fins 4350 are arranged that extend perpendicular to the longitudinal direction of the fourth finger 4300.

Fig. 14 shows that the fourth body 4200 also comprises a number of cavities 4220 on the outer surface. Compared to the first sealblock 1100 according to the second embodiment shown in Figs. 1 and 2, the fourth sealblock 4100 according to the fourth embodiment therefore comprises an open outer surface and a closed inner surface. Under certain conditions this may be preferable for molding the fourth fingers 4300 and the fourth body 4200 of the fourth sealblock 4100.

In summary, a sealblock according to the invention comprises vertical slots that are arranged between opposing side faces of vertical fingers and/or between side faces of a finger and a body of the sealblock. The fingers are detachable from the body and may be connected to the body by means of a snap-on connection. On each two side faces defining one slot, resiliently compressible foam strips are arranged. The slots are provided for receiving intermediate portions of filaments that run normal to the plane of the fingers. The filaments may be slided into the slots from an open upper end of each slot. Several filaments can be stacked on top of each other in each of the slots. The foam strips provide a sealing of the slots. Advantageously, adding additional filaments is easy and does not require any additional foam for sealing the filaments in the slots.

## Claims

1. Apparatus (1100, 2100, 3100, 4100) for feeding through at least one filament (500),
the apparatus (1100, 2100, 3100, 4100) comprising a body (1200, 2200, 3200, 4200)
and at least one finger (1300, 2300, 3300, 4300) arranged in a clearance (1220) of the body (1200, 2200, 3200, 4200),
the finger (1300, 2300, 3300, 4300) having a side face (310) adverse to a side face (210) of the body (1200, 2200, 3200, 4200),
wherein the side face (310) of the finger (1300, 2300, 3300, 4300) and the side face (210) of the body (1200, 2200, 3200, 4200) define between them a slot (400, 420) for receiving the filament (500),
wherein a foam strip (1320, 3320) is attached on at least one of the side faces (210, 310) defining the slot (400, 420),
**characterized in that**
the finger (1300, 2300, 3300, 4300) can be separated from the body (1200, 2200, 3200, 4200).

2. The apparatus (1100, 2100, 3100, 4100) according to claim 1,
**characterized in that**
the apparatus (1100, 2100, 3100, 4100) comprises a plurality of coplanar fingers (1300, 2300, 3300, 4300) ,
wherein opposed side faces (310) of two adjacent fingers (1300, 2300, 3300, 4300) define between them an additional slot (400, 410),
wherein a foam strip (1320, 3320) is attached on at least one of the side faces (310) defining the additional slot (400, 410).

3. The apparatus (1100, 2100, 3100, 4100) according to any one of claims 1 or 2,
**characterized in that**
two side faces (210, 310) defining one slot (400) both comprise foam strips (1320, 3320),
wherein these foam strips (1320, 3320) are in contact with one another.

4. The apparatus (1100, 2100, 3100, 4100) according to claim 3,
**characterized in that**
the foam strips (1320, 3320) provide a sealing of the slot (400).

5. The apparatus (1100, 2100, 3100, 4100) according to any one of claims 1 to 4,
**characterized in that**
at least one foam strip (1320, 3320) is glued on a side face (310, 210).

6. The apparatus (1100, 2100, 3100, 4100) according to any one of claims 1 to 5,
**characterized in that**
the slots (400) are designed for receiving an intermediate portion of the filament (500),
wherein the filament (500) extends normal to the plane of the fingers (1300, 2300, 3300, 4300).

7. The apparatus (1100, 2100, 3100, 4100) according to any one of claims 1 to 6,
**characterized in that**
foam strips (1320, 3320) on opposed side faces (310) of one finger (1300, 2300, 3300, 4300) are connected on an upper face (1360) of the finger (1300, 2300, 3300, 4300).

8. The apparatus (1100, 2100, 3100, 4100) according to any one of claims 1 to 7,
**characterized in that**
at least one finger (1300, 2300, 3300, 4300) can be connected to the body (1200, 2200, 3200, 4200) by means of a snap-on connection.

9. The apparatus (1100, 2100, 3100, 4100) according to any one of claims 1 to 8,
**characterized in that**
a foot section (1370, 2370, 3370) of at least one finger (1300, 2300, 3300, 4300) comprises a bore (1380),
wherein the body (1200, 2200, 3200, 4200) comprises a corresponding tap hole (1280).

10. The apparatus (1100, 2100, 3100, 4100) according to any one of claims 1 to 9,
**characterized in that**
a foot section (1370, 2370, 3370) of at least one finger (1300, 2300, 3300, 4300) comprises a groove (1390, 2390),
wherein the body (1200, 2200, 3200, 4200) comprises a bulge (1290, 2290) designed for mating with the groove (1390, 2390).

11. The apparatus (1100) according to any one of claims 1 to 10,
**characterized in that**
a foot section (1370) of at least one finger (1300) comprises a cut-out (1395),
wherein the body (1200) comprises a block (1295) designed for mating with the cut-out (1395).

12. The apparatus (2100, 3100, 4100) according to any one of claims 1 to 11,
**characterized in that**
a foot section (2370, 3370) of at least one finger (2300, 3300, 4300) comprises a first pin (2380, 3380),
wherein the body (2200, 3200, 4200) comprises an opening (2280, 3280) for receiving the first pin (2380, 3380).

13. The apparatus (3100) according to claim 12, **characterized in that**
the first pin (3380) comprises a first barb (3385) for latching in the opening (3280).

14. The apparatus (3100) according to any one of claims 1 to 13,
**characterized in that**
at least one finger (3300) comprises a notch (3330), wherein the body (3200) comprises a second pin (3290) with a second barb (3295) for mating with the notch (3330) .

15. The apparatus (1100, 2100, 3100, 4100) according to any one of claims 1 to 14,
**characterized in that**
at least one finger (1300, 2300, 3300, 4300) is at least partially hollow.
